(19) **Europäisches Patentamt**

**European Patent Office**

**Office européen des brevets**

(11) **EP 1 389 887 B1**

(12) **EUROPEAN PATENT SPECIFICATION**

(45) Date of publication and mention
of the grant of the patent:
**07.06.2006 Bulletin 2006/23**

(51) Int Cl.:
*H04Q 7/38* (2006.01)      *H04L 29/06* (2006.01)

(21) Application number: **03018259.6**

(22) Date of filing: **11.08.2003**

(54) **Optimized packet routing method in mobile IPv6 supporting localized mobility management**

Verfahren für optimales Routing von Paketen im mobilen IPv6 Protokoll mit Unterstützung von lokalem Mobilitätsmanagement

Procédé de routage optimisé de paquets dans le IPv6 mobile supportant la gestion de mobilité localisée

(84) Designated Contracting States:
**DE FR GB**

(30) Priority: **16.08.2002 KR 2002048534**

(43) Date of publication of application:
**18.02.2004 Bulletin 2004/08**

(73) Proprietor: **SAMSUNG ELECTRONICS CO., LTD.**
**Suwon-City, Kyungki-do (KR)**

(72) Inventor: **Han, Youn-Hee**
**Guri-city,**
**Gyunggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
- HAN Y-H ET AL: "ROUTE OPTIMIZATION BY THE USE OF TWO CARE-OF ADDRESSES IN HIERARCHICAL MOBILE IPV6" IEICE TRANS. COMMUN., vol. E84-B, no. 4, April 2001 (2001-04), pages 892-902, XP001051999
- JOHNSON D B ET AL: "Mobility Support in IPv6" IETF MOBILE IP WORKING GROUP, 18 November 1998 (1998-11-18), XP002253905 Retrieved from the Internet: <URL:http: //www.watersprings.org/pub/id/dr aft-ietf-mobileip-ipv6-07.txt> [retrieved on 2003-09-09]
- JIANG XIE ET AL: "A distributed dynamic regional location management scheme for mobile IP" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. 1 OF 3. CONF. 21, 23 June 2002 (2002-06-23), pages 1069-1078, XP010593671 ISBN: 0-7803-7476-2
- CASTELLUCCIA C: "HMIPV6: A HIERARCHICAL MOBILE IPV6 PROPOSAL" MOBILE COMPUTING AND COMMUNICATIONS REVIEW, ACM, NEW YORK, NY, US, vol. 4, no. 1, January 2000 (2000-01), pages 48-59, XP000940309 ISSN: 1091-1669

**Description**

The present invention relates to a packet routing method, and more particularly to an optimized packet routing method in mobile IPv6 supporting localized mobility management, which has a short handoff time and a low binding update and tunneling cost. The present invention is based on Korean Patent Application No. 2002-48534, which is incorporated herein by reference.

Recently, with the performance enhancements of mobile terminals such as portable computers or PDAs and the developments of wireless communications technologies, the majority of internet users hopes to use high-quality internet services even in wireless environment.

If all the mobile terminals occupy specific identifiers called 'IP address', users overloading their services that have been independently served at a link hierarchy as well as global roaming problems can be naturally solved. Therefore, the Internet Engineering Task Force (IETF) mobile IP working group is working on the standardization of appropriate protocols for mobile IP development and improvements thereof. Further, other standardization organizations are also planning to introduce the mobile IP to cellular systems such as UMTS, CDMA2000, GPRS, and so on.

In the meantime, as the number of wireless internet users increases, the existing internet protocol version 4 (IPv4) address system can not meet the required amount of increasing IP addresses. Therefore, research is actively ongoing for providing mobility by using the internet protocol version 6 (IPv6) as a next generation internet protocol.

The mobile IPv6 (hereinafter, referred to as MIPv6) technology of the IETF has been recognized as a standard technology for a method supporting the mobility at the time the internet IP protocol will be transferred to the IPv6 in the future.

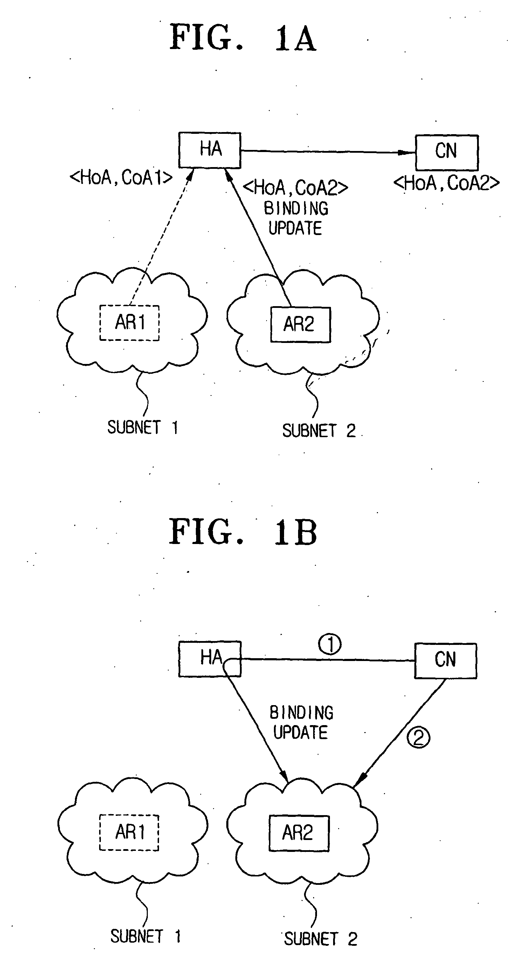

The MIPv6 is described with reference to Fig. 1A and Fig. 1B.

Fig. 1A is a view for showing paths for sending a binding update to a home agent HA and a correspondent node CN when a mobile node MN moves in the MIPv6, and Fig. 1B is a view for showing paths for a mobile node MN to receive a packet from a correspondent node CN in the MIPv6.

First, the following are the definitions of the constituents and terms of the MIPv6.

[0009]    - Mobile node (MN) is a node changing its network connection position.

[0010]    - Correspondent Node (CN) is a different node communicating with a mobile node (MN).

Home Network refers to a network communicated with a home address HoA before a mobile node (MN) moves.

[0012]    - Home Address (HoA) is an address configured through a home prefix before a mobile node (MN) moves to a different subnet.

[0013]    - Home Agent (HA) is a router, out of routers in a home network, having information on mobile node (MN) registrations and for transferring a packet to a current position of a mobile node (MN) when the mobile node (MN) leaves a home network.

[0014]    - Care of Address (CoA) is a temporary address configured through a network prefix in which a mobile node (MN) is located at present as an address obtained in an address auto-configuration manner of the IPv6 when the mobile node (MN) moves to an external network.

[0015]    - Binding is used to relate a temporarily configured care-of-address (CoA) to a home address (HoA) of original address as information for a registration to a home address (HoA) when a mobile node (MN) moves to an external network.

In the MIPv6, when a mobile node (MN) moves from a subnet 1 marked in a dotted line in Fig. 1A to a subnet 2 marked in a solid line in Fig. 1A, the mobile node (MN) sends a binding update (referred to 'BU', hereinafter) informing a home agent (HA) of its location.

When updating the binding, the mobile node (MN) registers the prefix information of the subnet 2 in which it is located and a temporary address CoA2 configured through an IP address.

Thereafter, as shown in Fig. 1B, only a packet transferred at first is routed via the home agent (HA) from a correspondent node (CN) (path ① of Fig. 1B), and most packets are transferred directly via an optimized path from the correspondent node (CN) to the mobile node (MN) (path ② of Fig. 1B).

As described above, the MIPv6 efficiently manages the macro mobility of mobile nodes (MNs), but does not efficiently manage the micro mobility of the same. As a method for overcoming such a drawback and complementing and enhancing the MIPv6, the localized mobility management in IPv6 (referred to as LMMv6, hereinafter) has been proposed by the IETF. The localized mobility management is a mobility management method in which routing information bound to a correspondent node (CN) and a home agent (HA) does not change when a mobile node (MN) moves to a different network within a locally limited interior.

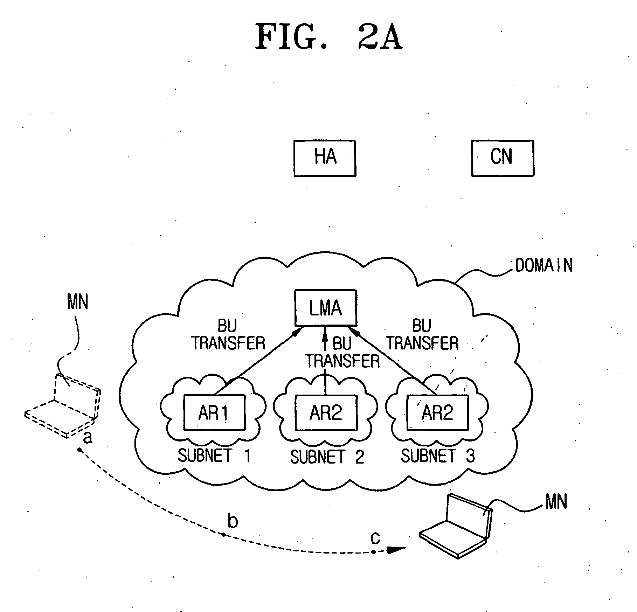

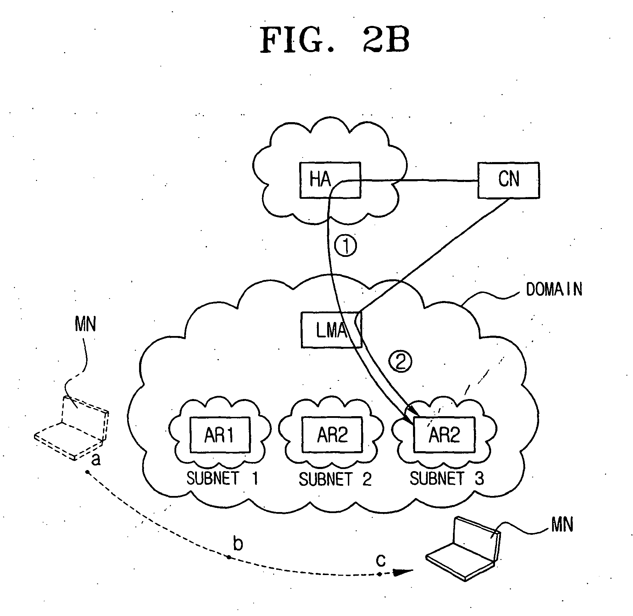

Fig. 2A is a view for showing paths for sending a binding update to a home agent (HA) and a corresponding node when a mobile node (MN) moves in the LMMv6, and Fig. 2B is a view for showing paths for a mobile node (MN) to receive packets from a correspondent node (CN) in the LMMv6.

First, the definitions of the constituents and terms of the LMMv6 are as follows.

[0022]    - Localized Mobility Agent (LMA) is used like a home agent in a network to which a mobile node (MN) moves, and is an agent for performing the localized mobility management of a mobile node (MN).

**[0023]** - Localized Mobility Domain is a group of plural networks in which the localized mobility management is performed, wherein one or more localized mobility agents (LMAs) must exist in a corresponding domain and the mobility of a mobile node (MN) must be hidden against foreign home agents (HAs) and correspondent nodes (CNs).

**[0024]** - Regional CoA (RCoA) is a temporary address configured by a mobile node (MN) receiving a prefix of a network in which a localized mobility agent (LMA) is located as soon as the mobile node (MN) arrives at the network to which the MOBILE NODE (MN) moves. An RCoA the mobile node (MN) receives when entering a corresponding domain does not, change during moving inside the domain, and the RCoA is included in binding information to be sent to foreign home agents (HAs) and correspondent nodes (CNs).

**[0025]** - On-line Local CoA (LCoA) has the same meaning as the CoA described in the MIPv6, and is referred to as LCoA in order to distinguish it from the RCoA.

As shown in Fig. 2A, in the LMMv6, a mobile node (MN) does not have to send a binding update informing a home agent (HA) of its location when the mobile node (MN) moves to a new location in the same domain(a → b → c). Simply, the mobile node (MN) updates the binding only to the localized mobility agent (LMA).

Therefore, the LMMv6 has an advantage of reducing the binding update cost and the handoff delay time compared to the MIPv6.

Only a packet transferred at first from a correspondent node (CN) is routed through the localized mobility agent (LMA) via a home agent (HA) (path ① of Fig. 2B), and the binding update including a mobile node (MN) is directly transferred to a correspondent node (CN). Thereafter, most packets are transferred via the localized mobility agent (LMA) from the correspondent node (CN) (path ② of Fig. 2B).

In the LMMv6, all the packets sent from a cormspondent node (CN) are transferred to a mobile node (MN) through a tunneling via the localized mobility agent (LMA). Therefore, data packet transfers are more delayed than the MIPv6, and the localized mobility agent (LMA) is overly loaded.

Accordingly, both the MIPv6 and the LMMv6 have advantages and disadvantages, so that a new optimized packet routing method is demanded which can overcome such disadvantages.

In "Route Optimization by the Use of Two Care-of Addresses in Hierarchical Mobile IPv6", IEICE Trans. Commun., Vol. E84-B, No 4, April 2001, Youn-Hee Han et al. suggest route optimization by the use of two care-of addresses (COAs). If a mobile node (MN) moves into a new domain, it gets two COAs: the domain COA and the MN's. COA. In this case, the MN registers the binding between its home address and the two COAs to its home agent and external correspondent nodes (CNs). If the MN moves within a domain, it only needs to change its COA; the domain COA remains the same. In this case, the MN registers the binding between its home address and its COA with its current domain agent and internal CNs. These binding registrations are done by the MN that sends a packet containing a binding update (BU) option. All IPv6 MNs maintain cache entries of bindings for other MNs, updated at receiving BUs. In addition, each MN maintains a BU list recording information for each BU. It is assumed that the MN sends BUs for refreshing the cached binding to the CN periodically.

It is the object of the present invention to provide a more cost-efficient optimized packet routing method in mobile IPv6. This object is solved by the subject matter of independent claim 1.

Preferred embodiments of the present invention are defined by the dependent claims.

According to another aspect of the present invention, there is provided an optimized packet routing method in mobile IPv6 supporting localized mobility managements which has a short handoff time and low binding update and tunneling costs.

According to an embodiment of the present invention, an optimized packet routing method in mobile IPv6 supporting localized mobility managements wherein packets are routed between a mobile node and a correspondent node to which the mobile node transfers the packets in a network system including the mobile nodes and a localized mobility agent performing localized mobility managements of the mobile node, comprises steps of (A) sending a binding update including an LCoA to the correspondent node by the mobile node when the correspondent node sends a plurality of packets to the mobile node; (B) decides whether or not a haridoff is performed when the mobile node moves; (C) transferring to the correspondent node a binding update including an RCoA of an arbitrary address configured by receiving a prefix of a network in which a localized mobility agent (LMA) existing in an area in which the mobile node moves is located in a case that it is decided that the handoff is performed; and (D) sending the packets to the localized mobility agent through the RCoA by the correspondent node.

Further, preferably, the mobile node directly receives the packets from the correspondent node during communications with the correspondent node as the mobile node does not move, and the mobile node receives the packets through the localized mobility agent while the mobile node performs the handoff.

Preferably, in a state that the mobile node communicates with the correspondent node, the mobile node sends to the correspondent node a binding update including an LCoA of an address configured through a prefix of a network in which the mobile node is located.

Preferably, the mobile node records information on a home agent performing a binding update and the correspondent node to form a binding update list adding optimized (O) flags, and decides and sends one of the LCoA and the RCoA upon transferring a binding update to the correspondent node based on the optimized flags.

Preferably, when the mobile node receives a first packet from the correspondent node, the mobile node decides whether the transferred packets are tunneled from the localized mobility agent, and manages a reception rate of the tunneled packets.

Preferably, the mobile node verifies a layer 2 connection state and detects the time when the handoff occurs.

## BRIEF DESCRIPTION OF THE DRAWINGS

The above object and other aspects of the present invention will become more apparent by describing in detail a preferred embodiment thereof with reference to the attached drawings, in which:

Fig. 1A is a view for showing paths for a mobile node to send a binding update to a home agent and a correspondent node when the mobile node moves in MIPv6;

Fig. 1B is a view for showing paths for a mobile node to receive packets from a correspondent node in MIPv6;

Fig. 2A is a view for showing paths for a mobile node to send a binding update to a home agent and a correspondent node when the mobile node moves in LMMv6;

Fig. 2B is a view for showing paths for a mobile node to receive packets from a correspondent node in LMMv6;

Fig. 3 is a view for showing a binding update list provided to a mobile node according to an embodiment of the present invention;

Fig. 4 is a view for showing the movement of a mobile node;

Fig. 5 is a graph for showing an SNR in state of Fig. 4;

Fig. 6 is a flow chart for showing an operation process when a mobile node receives a first packet from a correspondent node and when the mobile node carries out a handoff according to an embodiment of the present invention;

Fig. 7 is a view for showing an operation process for a binding update when a mobile node moves in the same domain;

Fig. 8 is a view for showing packet flows after a binding update was carried out in Fig. 7 and a mobile node moved to a different location in the same domain;

Fig. 9 is a view for showing an operation process for a binding update when a mobile node moves in different domains; and

Fig. 10 is a view for showing packet flows after a binding update was carried out in Fig. 9 and a mobile node moved to a location in a new domain.

## DESCRIPTION OF THE PREFERRED EMBODIMENT

Hereinafter, the present invention will be described in detail with reference to the accompanying drawings.

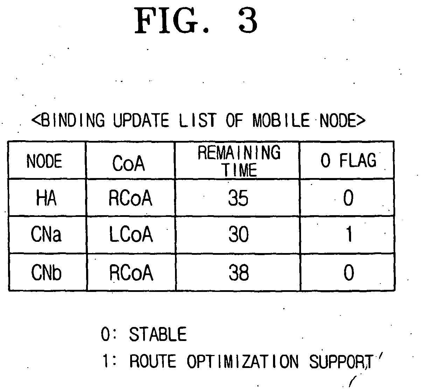

Fig. 3 is a view for showing a binding update list provided to a mobile node (MN) according to an embodiment of the present invention.

A mobile node (MN) is provided with management functions, tunneling packet reception rate management functions, L2 trigger supports, and L2 state trace functions, which are added for correspondent nodes (CNs) existing in a binding update list.

The binding update list is to record effective times and so on for binding updates with respect to home agents (HAs) and correspondent nodes (CNs) after a mobile node (MN) sent the binding updates to the home agents (HAs) and the correspondent nodes (CNs) in the existing MIPv6 or the LMMv6.

Further, a mobile node (MN) adds an extra O flag (Optimized flag) for individual entries of the list, sets a 0 for the O flag if a corresponding correspondent node (CN) is receiving the RCoA, and sets a 1 for the O flag if the same is receiving the LCoA.

Further, a mobile node (MN) performs the L2 trigger support and L2 state trace technology.

The L2 trigger is a technology detecting in advance and informing the third layer that a handoff is going to occur in the second layer of the network protocol stack of a mobile node (MN) itself. In the prior wireless LAN technology, a wireless LAN card in a mobile node (MN) keeps measuring a signal-to-noise ratio(SNR) in order to check the quality of a current wireless signal.

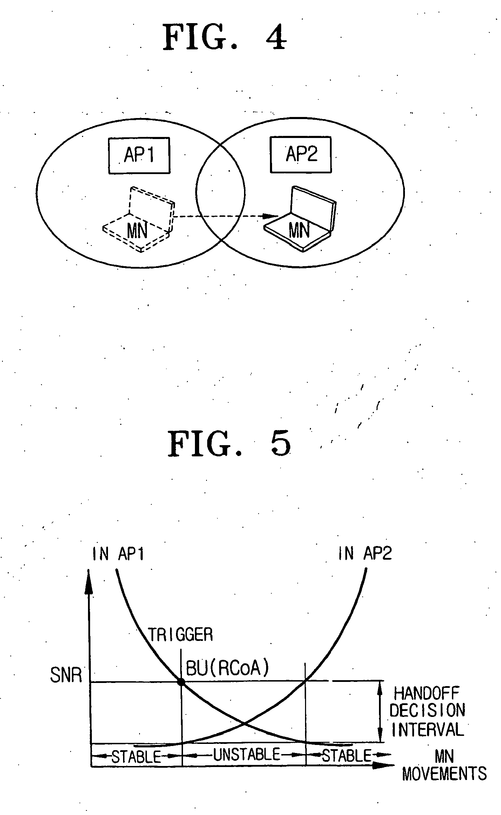

Fig. 4 shows that a mobile node (MN) is moving from an AP1 area to an AP2 area, and Fig. 5 is a graph for showing SNR variations in the situation of Fig. 4.

As shown in Fig. 5, as a mobile node (MN) moves closer to the AP2 area, the smaller the SNR values measured from the AP1 become, and the larger the SNR values measured from the AP2 become. At this time, the mobile node (MN) should be provided with one of the following parameters and two kinds of functions.

**[0060]** - a handoff decision interval

**[0061]** - with an SNR1 value measured from an AP1 currently connected, an SNR2 value measured from an arbitrary AP of the APs in adjacent other areas, and handoff decision interval values (HANDOFF_DECISION_INTERVAL) which are threshold values designated beforehand, when the following Formula 1 is satisfied, a binding update including the RCoA is sent to correspondent nodes (CNs) set to a 1 for the O flag in the various entries in the binding update list.
[Formula 1]

$$SNR1 - SNR2 < HANDOFF\_DECISION\_INTERVAL$$

Also, with an SNR1 value measured from an AP1 currently connected, an SNR2 value measured from an arbitrary AP of the APs in adjacent other areas, and handoff decision interval values (HANDOFF_DECISION_INTERVAL) which are threshold values designated beforehand, when the following Formula 2 is satisfied, it is recognized as the state of [S:Stable], and, otherwise, as the state of [U:Unstable].
[Formula 2]

$$|SNR1 - SNR2| > HANDOFF\_DECISION\_INTERVAL$$

Further, a mobile node (MN) has a particular parameter TUNNELING_PACKET_COUNT for tunneling packet reception rate managements.
A mobile node (MN) decides whether packets transferred from an arbitrary correspondent node (CN) is tunneled from the localized mobility agent (LMA), and then decides whether such packets more than the TUNNELING_PACKET_ COUNT arrive per second.
If the packets arrive, when an L2 state grasped by the L2 state trace technology of a mobile node itself is the [S], the mobile node (MN) sends to a correspondent node (CN) a binding update in which the LCoA is included, and the mobile node (MN) sets to a 1 for the O flag of an entry corresponding to the correspondent node (CN) in a binding update list of the mobile node (MN).
The following is a description on mobile node operations according to an embodiment of the present invention.
The mobile node operations can be split as follows.
(Case 1) when a mobile node (MN) does not communicate with a correspondent node (CN),
**[0071]** (Case 2) when a mobile node (MN) receives the first packet from a correspondent node (CN),
**[0072]** (Case 3) when a mobile node (MN) performs a handoff in the same domain, and
(Case 4) when a mobile node (MN) performs a handoff between different domains.
First, as in the Case 1, if a mobile node (MN) does not communicate with a correspondent node (CN), the correspondent node (CN) is not registered in the binding update list of the mobile node (MN) in general, and the binding update is performed in the same way as the LMMv6.
Further, in the Case 2, when a mobile node (MN) receives the first packet from a correspondent node (CN), the following two kinds of cases can occur.
The first case is the case that a mobile node (MN) receives packets through a home agent (HA) and the localized mobility agent (LMA) from a correspondent node (CN), actually starting up a communication session.
The second case is the case that a mobile node (MN) moves to a new area so as to completely finish a handoff and the mobile node (MN) receives packets in the newly moved area for the first time.

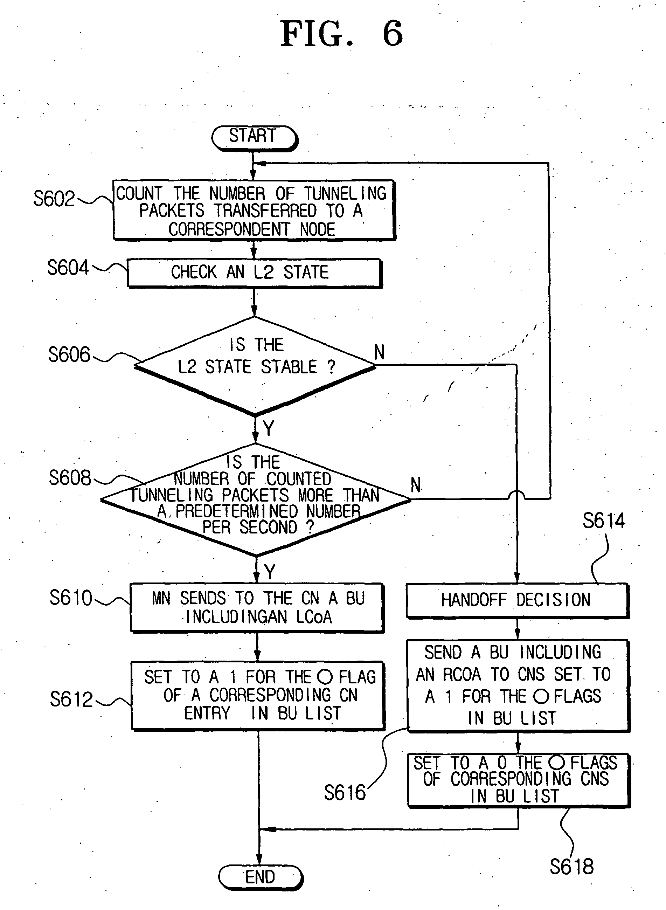

Fig. 6 is a flow chart for showing an operation process when a mobile node (MN) receives a first packet from a correspondent node (CN) and when the mobile node (MN) carries out a handoff according to an embodiment of the present invention.
As shown in Fig. 6, when a mobile node (MN) receives the first packet from a correspondent node (CN), the mobile node (MN) decides whether packets are transferred through a tunneling from the localized mobility agent (LMA) and counts the packets transferred through the tunneling (S602).
Further, the mobile node (MN) checks the L2 state (S604). If the L2 state is stable (S606), and the mobile node (MN) verifies whether the number of counted tunneling packets is more than a predetermined number per second (S608). If the number of counted tunneling packets is not more than the predetermined number per second, the mobile node (MN) returns to its initial state again.
If the number of counted tunneling packets is more than the predetermined number per second, the mobile node (MN) transfers to a correspondent node (CN) a binding update including the LCoA (S610)

Thereafter, the correspondent node (CN) directly transfers packets to the mobile node (MN) without the need of tunneling by using the LCoA transferred.

In the meantime, if the mobile node (MN) performs a handoff (S614) the mobile node (MN) performs the L2 trigger supports and the L2 state trace, and transfers a binding update including the RCoA to all correspondent nodes (CNs) set to a 1 for their O flags (S616).

Further, the mobile node (MN) sets the O flags in the binding update list to a 0 (S618).

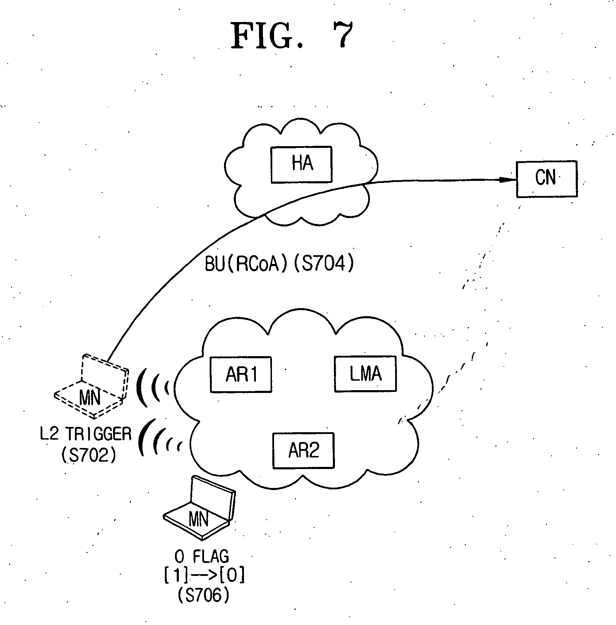

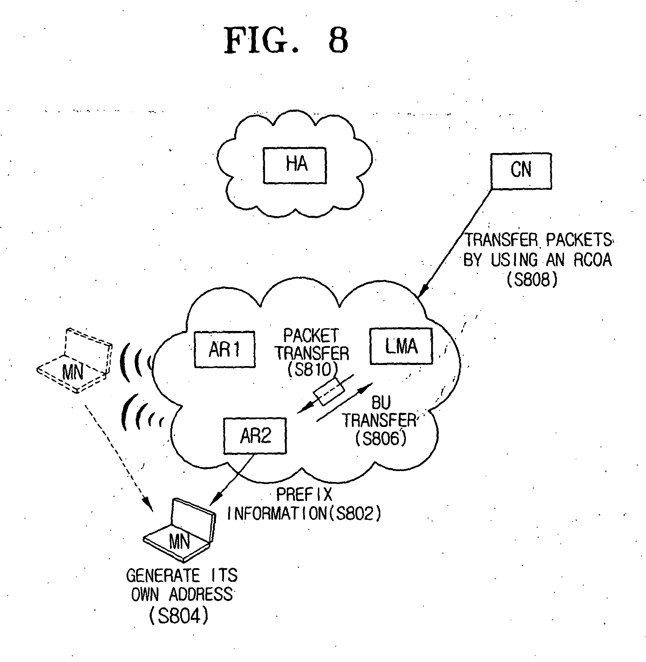

Next, operation flows when a mobile node (MN) performs a handoff in the same domain are described with reference to Fig. 7 and Fig. 8.

Fig. 7 shows a binding update operation flow when a mobile node (MN) moves in the same domain.

A mobile node (MN) performs a handoff when the mobile node (MN) moves from an arbitrary area to a different area in the domain.

A mobile node (MN) checks a handoff occurrence by performing the L2 trigger supports and the L2 state trace (S702). The mobile node (MN) transfers a binding update including the RCoA obtained in the domain in which the mobile node (MN) is currently located to all correspondent nodes (CNs) set to a 1 for the O flags presented by the present invention, that is, to the correspondent nodes (CNs) transferring packets through the LCoA (S704). Further, the mobile node (MN) sets to a 0 the O flags set to a 1 (S706).

Fig. 8 shows a packet flow after the binding update operation is done in Fig. 7 and the mobile node (MN) moves to a different area in the same domain.

After a binding update operation is done, and, if a mobile node (MN) moves to a different area and connects to a new L2, the mobile node (MN) receives prefix information from a new router (AR2) of the area (S802) and configures a new address of its own (S804).

Further, the mobile node (MN) transfers a binding update to the localized mobility agent (LMA) which manages a corresponding domain (S806).

In the meantime, a correspondent node (CN) directly transfers packets through the existing LCoA, but, after receiving a binding update including the RCoA transferred by the L2 trigger supports of the mobile node (MN), the correspondent node (CN) sends packets to the localized mobility agent (LMA) by using the RCoA (S808).

The localized mobility agent (LMA) which has received a binding update from the mobile node (MN) tunnels packets to a moved area in use of the new LCoA (S810).

However, even though not shown for the convenience of descriptions, if the localized mobility agent (LMA) does not receive a binding update that a mobile node (MN) sends after completely finishing a handoff, the localized mobility agent (LMA) tunnels packets to a prior location.

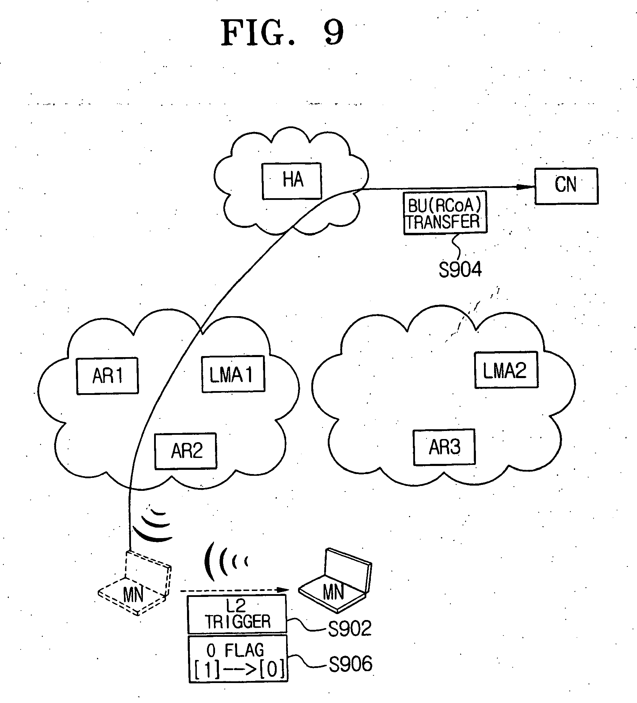

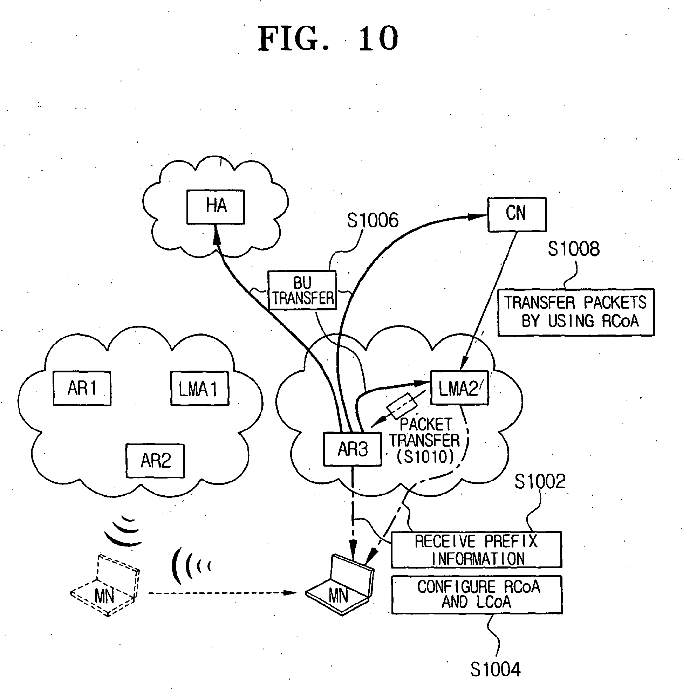

Hereinafter, the operations when a mobile node (MN) performs a handoff between different domains are described with reference to Fig. 9 and Fig. 10.

Fig. 9 is a flow chart for showing binding update operations when a mobile node (MN) moves in different domains.

A mobile node (MN) performs a handoff between different domains when the mobile node (MN) moves from a currently located domain to a different domain.

The mobile node (MN) carries out the L2 trigger supports and the L2 state trace to check a handoff occurrence (S902). The mobile node (MN) sends a binding update including the RCoA obtained from a domain in which the mobile node (MN) is currently located to all correspondent nodes (CNs) set to a 1 for the O flags presented by the present invention, that is, to the correspondent nodes (CNs) transferring packets through the LCoA (S904). Further, mobile node (MN) sets the O flags to a 0 (S906).

Fig. 10 shows a packet flow after a mobile node (MN) performs a binding update operation in Fig. 9 and the mobile node (MN) moves in an area of a new domain.

If a mobile node (MN) moves in an area of a new domain for a new L2, the mobile node (MN) receives prefix information from a new router AR3 of the area and the localized mobility agent (LMA2) (S1002) and configures its own RCoA and LCoA addresses (S 1004).

Further, the mobile node (MN) sends a binding update including the RCoA to a home agent (HA) and correspondent nodes (CNs) in the binding update list, and sends a binding update including the LCoA to the localized mobility agent (LMA2) which manages a new domain (S1006).

A correspondent node (CN) transfers packets to the localized mobility agent (LMA2) in use of the RCoA after having received the binding update including the RCoA transferred by the L2 trigger supports of the mobile node (MN), rather than transferring packets directly through the existing LCoA (S1008).

In the meantime, even though not shown, if the correspondent node (CN) does not receive a BU sent after having completely finished a handoff with the mobile node (MN), the correspondent node (CN) sends packets to the prior LMA.

Further, the localized mobility agent (LMA2) that has received packets tunnels the packets to the moved area in use of the new LCoA (S 1010).

As described so far, the optimized packet routing method in mobile IPv6 supporting localized mobility managements according to the present invention enables the following effects:

Firstly, data packet transfers are nearly similar in a cost aspect to the MIPv6 having the least data packet transfer cost.

Secondly, a handoff delay is nearly similar in a time aspect to the LMMv6 having a relatively small handoff delay time.

Thirdly, overloads can be eliminated which occur to localized mobility agents (LMAs) being important factors of a localized mobility management protocol.

Although the preferred embodiment of the present invention has been described, it will be understood by those skilled in the art that the present invention should not be limited to the described preferred embodiment, but various changes and modifications can be made within the spirit and scope of the present invention as defined by the appended claims.

**Claims**

1.  An optimized packet routing method in mobile IPv6 supporting localized mobility management wherein packets are routed between a mobile node and a correspondent node in a network system including the nodes and a localized mobility agent performing localized mobility management of the mobile node, comprising the steps of:

    (A) sending a binding update including a local care of address LcoA of an address configured through a prefix of a network in which the mobile node is located to the correspondent node by the mobile node when the correspondent node sends packets to the mobile node;
    (B) deciding whether or not a handoff occurs while the mobile node moves;
    (C) transferring to the correspondent node a binding update including a regional care of address RcoA of an arbitrary address configured by receiving a prefix of a network in which a localized mobility agent existing in an area in which the mobile node moves is located in a case in which it is decided that the handoff is performed; and
    (D) sending packets to the localized mobility agent through the RCoA by the correspondent node,

    wherein the mobile node records information on binding updates with respect to a home agent and the correspondent node by forming a binding update list and adding optimized flags to it, and decides to send one of the LCoA and the RCoA upon transferring a binding update to the correspondent node based on the optimized flags.

2.  An optimized packet routing method according to claim 1, wherein the mobile node sets the optimized flags to a 0 when the correspondent node receives the RCoA, sets the optimized flags to a 1 when the correspondent node receives the LCoA, and, in the case that it is decided that the mobile node performs the handoff, the mobile node sends a binding update including the RCoA to all correspondent nodes set to a 1 for the optimized flags.

3.  An optimized packet routing method according to claim 1 or 2, wherein the mobile node directly receives the packets from the correspondent node during communications with the correspondent node as the mobile node does not move, and the mobile node receives the packets through the localized mobility agent while the mobile node performs the handoff.

4.  An optimized packet routing method according to any of claims 1 to 3, wherein, when the mobile node receives a first packet from the correspondent node, the mobile node decides whether the transferred packets are tunneled from the localized mobility agent, and manages a reception rate of the tunneled packets.

5.  An optimized packet routing method according to any of claims 1 to 4, wherein the mobile node verifies a layer 2 connection state and detects the time when the handoff occurs.

6.  An optimized packet routing method according to claim 5, wherein the mobile node measures a signal-to-nose ratio SNR, and, when the mobile node moves from a first access point area to a second access point area, the mobile node obtains a difference between a first signal-to-noise ratio SNR1 measured from the first access point and a second signal-to-noise ratio SNR2 measured from the second access point, and, when the difference is less than a predetermined value, the mobile node detects a handoff occurrence beforehand and performs an L2 trigger informing a layer 3 of a protocol of the handoff occurrence.

7.  An optimized packet routing method according to claim 6, wherein, based on L2 trigger supports and L2 state trace technology of the mobile node, when it is decided that the handoff occurs in the mobile node, a binding update including the RCoA is sent to all correspondent nodes set to a 1 for the optimized flags.

**Patentansprüche**

1. Verfahren zum optimierten Paket-Routing bei mobilem IPv6, das lokales Mobility Management unterstützt, wobei Routing von Paketen zwischen einem Mobile Node und einem Correspondent Node in einem Netzwerksystem, das die Nodes und einen lokalen Mobility Agent zum Durchführen von lokalen Mobility Management einschließt, durchgeführt wird, und es die folgenden Schritte umfasst:

(A) Senden eines Binding-Update einschließlich einer lokalen Care-of-Adresse (LcoA) einer Adresse, die über einen Präfix eines Netzwerkes konfiguriert wird, indem sich der Mobile Node befindet, zu dem Correspondent Node durch den Mobile Node, wenn der Correspondent Node Pakete zu dem Mobile Node sendet;
(B) Entscheiden, ob ein Handover stattfindet, während sich der Mobile Node bewegt, oder nicht;
(C) Übertragen eines Binding-Update, das eine regionale Care-of-Adresse (RcoA) einer beliebigen Adresse enthält, die konfiguriert wird, indem ein Präfix eines Netzwerkes empfangen wird, in dem sich ein lokaler Mobility Agent, der in einem Bereich vorhanden ist, in dem sich der Mobile Node bewegt, sich befindet, zu dem Correspondent Node, wenn entschieden wird, dass der Handover durchgeführt wird; und
(D) Senden von Paketen zu dem lokalen Mobility Agent über die regionale Care-of-Adresse durch den Correspondent Node,

wobei der Mobile Node Informationen über Binding-Updates in Bezug auf einen Home Agent und den Correspondent Node aufzeichnet, indem er eine Binding-Update-Liste erzeugt und optimierte Flags zu dieser hinzufügt und auf Basis der optimierten Flags entscheidet, die lokale Care-of-Adresse oder die regionale Care-of-Adresse nach dem Übertragen eines Binding-Updates zu dem Correspondent Node zu senden.

2. Verfahren zum optimierten Routing von Paketen nach Anspruch 1, wobei der Mobile Node die optimierten Flags auf eine 0 setzt, wenn der Correspondent Node die regionale Care-of-Adresse empfängt, die optimierten Flags auf eine 1 setzt, wenn der Correspondent Node die lokale Care-of-Adresse empfängt, und, wenn entschieden wird, dass der Mobile Node den Handover durchführt, der Mobile Node ein Binding-Update, das die regionale Care-of-Adresse enthält, zu allen Correspondent Nodes sendet, die bezüglich der optimierten Flags auf eine 1 gesetzt sind.

3. Verfahren zum optimierten Routing von Paketen nach Anspruch 1 oder 2, wobei der Mobile Node bei Verbindungen mit dem Correspondent Node die Pakete direkt von dem Correspondent Node empfängt, wenn sich der Mobile Node nicht bewegt, und der Mobile Node die Pakete über den lokalen Mobility Agent empfängt, wenn der Mobile Node den Handover durchführt.

4. Verfahren zum optimierten Routing von Paketen nach einem der Ansprüche 1 bis 3, wobei, wenn der Mobile Node ein erstes Paket von dem Correspondent Node empfängt, der Mobile Node entscheidet, ob die übertragenen Pakete von dem lokalen Mobility Agent getunnelt werden, und eine Empfangsrate der getunnelten Pakete verwaltet.

5. Verfahren zum optimierten Routing von Paketen nach einem Ansprüche 1 bis 4, wobei der Mobile Node einen Layer-2-Verbindungszustand prüft und die Zeit erfasst, zu der der Handover stattfindet.

6. Verfahren zum optimierten Routing von Paketen nach Anspruch 5, wobei der Mobile Node ein Signal-Rausch-Verhältnis misst, und wenn sich der Mobile Node von einem ersten Zugriffspunktbereich zu einem zweiten Zugriffspunktbereich bewegt, der Mobile Node eine Differenz zwischen einem ersten Signal-Rausch-Verhältnis, das von dem ersten Zugriffspunkt gemessen wird, und einem zweiten Signal-Rausch-Verhältnis, das von dem zweiten Zugriffspunkt gemessen wird, ermittelt, und wenn die Differenz geringer ist als ein vorgegebener Wert, der Mobile Node das Stattfinden eines Handovers im Voraus erfasst und einen L2-Trigger durchführt, der eine Layer 3 über ein Protokoll des Stattfindens des Handovers informiert.

7. Verfahren zum optimierten Routing von Paketen nach Anspruch 6, wobei, wenn entschieden wird, dass der Handover in dem Mobile Node stattfindet, auf Basis von L2-Trigger-Unterstützungen und L2-Zustands-Verfolgungstechnologien des Mobile Node, ein Binding-Update, das die regionale Care-of-Adresse enthält, zu allen Correspondent Nodes gesendet wird, die bezüglich der optimierten Flags auf eine 1 gesetzt sind.

**Revendications**

1. Procédé de routage de paquets optimisé dans l'IPv6 mobile supportant la gestion de mobilité localisée dans lequel les paquets sont acheminés entre un noeud mobile et un noeud correspondant dans un système de réseau incluant les noeuds et un agent de mobilité localisée qui effectue la gestion de mobilité localisée du noeud mobile, comprenant les étapes consistant à :

   (A) envoyer une mise à jour d'association incluant une conservation locale d'adresse LcoA d'une adresse configurée à travers un préfixe d'un réseau dans lequel le noeud mobile est situé au noeud correspondant par le noeud mobile lorsque le noeud correspondant envoie des paquets au noeud mobile ;
   (B) décider si un transfert intercellulaire se produit ou non pendant que le noeud mobile se déplace ;
   (C) transférer au noeud correspondant une mise à jour d'association incluant une conservation régionale d'adresse RcoA d'une adresse arbitraire configurée en recevant un préfixe d'un réseau dans lequel se situe un agent de mobilité localisée existant dans une zone dans laquelle le noeud mobile se déplace dans le cas où il est décidé que le transfert intercellulaire est effectué ; et
   (D) faire envoyer des paquets à l'agent de mobilité localisée via la RCoA par le noeud correspondant,

   dans lequel le noeud mobile enregistre de l'information sur les mises à jour d'association relativement à un agent domestique et au noeud correspondant en formant une liste de mises à jour d'association et en y ajoutant des drapeaux optimisés, et décide d'envoyer la LCoA ou la RCoA lors du transfert d'une mise à jour d'association au noeud correspondant d'après les drapeaux optimisés.

2. Procédé de routage de paquets optimisé selon la revendication 1, dans lequel le noeud mobile met les drapeaux optimisés à une valeur 0 lorsque le noeud correspondant reçoit la RCoA, met les drapeaux optimisés à une valeur 1 lorsque le noeud correspondant reçoit la LCoA, et, dans le cas où il est décidé que le noeud mobile effectue le transfert intercellulaire, le noeud mobile envoie une mise à jour d'association incluant la RCoA à tous les noeuds correspondants mis à 1 pour les drapeaux optimisés.

3. Procédé de routage de paquets optimisé selon la revendication 1 ou 2, dans lequel le noeud mobile reçoit directement les paquets du noeud correspondant pendant les communications avec le noeud correspondant quand le noeud mobile ne se déplace pas, et le noeud mobile reçoit les paquets via l'agent de mobilité localisée quand le noeud mobile effectue le transfert intercellulaire.

4. Procédé de routage de paquets optimisé selon l'une quelconque des revendications 1 à 3, dans lequel, lorsque le noeud mobile reçoit un premier paquet en provenance du noeud correspondant, le noeud mobile décide si les paquets transférés passent par des tunnels depuis l'agent de mobilité localisée, et gère un débit de réception des paquets passant par des tunnels.

5. Procédé de routage de paquets optimisé selon l'une quelconque des revendications 1 à 4, dans lequel le noeud mobile vérifie un état de connexion de couche 2 et détecte le moment où se produit le transfert intercellulaire.

6. Procédé de routage de paquets optimisé selon la revendication 5, dans lequel le noeud mobile mesure un rapport signal/bruit RSB et, lorsque le noeud mobile se déplace d'une zone de premier point d'accès vers une zone de deuxième point d'accès, le noeud mobile obtient une différence entre un premier rapport signal/bruit RSB1 mesuré au premier point d'accès et un deuxième rapport signal/bruit RSB2 mesuré au deuxième point d'accès, et, quand cette différence est inférieure à une valeur prédéterminée, le noeud mobile détecte un transfert intercellulaire avant et exécute un déclenchement L2 informant une couche 3 d'un protocole de ce transfert intercellulaire.

7. Procédé de routage de paquets optimisé selon la revendication 6, dans lequel, d'après les supports de déclenchement L2 et la technologie de suivi d'état L2 du noeud mobile, lorsqu'il est décidé que le transfert intercellulaire se produit dans le noeud mobile, une mise à jour d'association incluant la RCoA est envoyée à tous les noeuds correspondants mis à 1 pour les drapeaux optimisés.

# FIG. 1A

<HoA,CoA1>

<HoA,CoA2>
BINDING
UPDATE

<HoA,CoA2>

SUBNET 1

SUBNET 2

# FIG. 1B

BINDING
UPDATE

SUBNET 1

SUBNET 2

# FIG. 2A

# FIG. 2B

# FIG. 3

<BINDING UPDATE LIST OF MOBILE NODE>

| NODE | CoA | REMAINING TIME | O FLAG |
|------|-----|----------------|--------|
| HA | RCoA | 35 | 0 |
| CNa | LCoA | 30 | 1 |
| CNb | RCoA | 38 | 0 |

0: STABLE

1: ROUTE OPTIMIZATION SUPPORT

# FIG. 4

# FIG. 5

# FIG. 6

START

S602 — COUNT THE NUMBER OF TUNNELING PACKETS TRANSFERRED TO A CORRESPONDENT NODE

S604 — CHECK AN L2 STATE

S606 — IS THE L2 STATE STABLE ?   N

Y

S608 — IS THE NUMBER OF COUNTED TUNNELING PACKETS MORE THAN A PREDETERMINED NUMBER PER SECOND ?   N

Y

S610 — MN SENDS TO THE CN A BU INCLUDINGAN LCoA

S612 — SET TO A 1 FOR THE ○ FLAG OF A CORRESPONDING CN ENTRY IN BU LIST

S614 — HANDOFF DECISION

SEND A BU INCLUDING AN RCOA TO CNS SET TO A 1 FOR THE ○ FLAGS IN BU LIST

S616 —

SET TO A 0 THE ○ FLAGS OF CORRESPONDING CNS IN BU LIST

S618

END

# FIG. 7

# FIG. 8

HA

CN

TRANSFER PACKETS
BY USING AN RCOA
(S808)

AR1

PACKET
TRANSFER
(S810)

LMA

MN

BU
TRANSFER
(S806)

AR2

PREFIX
INFORMATION(S802)

MN

GENERATE ITS
OWN ADDRESS
(S804)

# FIG. 9

# FIG. 10